# EUROPEAN PATENT APPLICATION

(11) **EP 0 583 080 A2**
(43) Date of publication of application: **16.02.1994**
(21) Application number: 93305544.4
(22) Date of filing: 15.07.1993
(51) Int. Cl.: G06K 9/56, G06K 9/46

(54) **Image processing**

(30) Priority: 11.08.1992 GB 9217011
(71) Applicant: GEC-MARCONI LIMITED, Stanmore, Middlesex HA7 4LY (GB)
(72) Inventor: Coombs, Timothy Arthur, St. Albans, Herts AL4 ONX (GB)
(74) Representative: Hoste, Colin Francis

(57) **Abstract**

An image processing method is used to decide which pixels having a value in some pre-determined range are associated to form an object. The method has the steps of :
(i) marking every pixel having the pre-determined property ;
(ii) scanning across the image and for each marked pixel checking whether any of the adjacent pixels already scanned has a label ; and (iii) if none of the adjacent pixels already scanned has a label the marked pixel is given a new label ; if the adjacent pixels already scanned include one or more pixels having a label, the marked pixel is given that label and if the adjacent pixels already scanned include pixels having different labels the marked pixel is given one of these labels and the fact that the pixels with these labels are all associated is noted.

## Description

This invention relates to a method of image processing.

In image processing it is common to process image data to identify objects shown in the image and produce information about them such as their centre of area.

In an image made of an array of pixels each having an associated value it is normal to label pixels as being of interest if they have some particular value or a value in a particular range associated with them. It is then necessary to identify which of these labelled pixels are associated together to form each object in the image.

In a normal image processing system where the pixels are arranged in rows and columns this is carried out by passing a square 3 x 3 window across the image one pixel at a time after the pixels having an associated value of interest have been flagged. Each pixel having an associated value of interest is then assigned a label depending on the presence or not of other labels within the window.

If there are no other labelled pixels within the window the flagged pixel is given a new label.

If there are only pixels with one label within the window the flagged pixel is given that label.

If there are pixels with different labels within the window the flagged pixel is given one of these labels and the fact that the two labels are associated parts of the same object is recorded.

It has been realised that this procedure has the disadvantage that a large number of unnecessary comparisons made, requiring extra data processing equipment which is not in fact necessary.

This invention was intended to produce an image processor overcoming this problem at least in part.

This invehtion provides a method of image processing to identify which pixels having some pre-determined property in the image are associated together comprising the steps of:
(i) marking every pixel having the pre-determined property;
(ii) scanning across the image and for each marked pixel checking whether any of the adjacent pixels already scanned has a label; and
(iii) if none of the adjacent pixels already scanned has a label the marked pixel is given a new label; if the adjacent pixels already scanned include one or more pixels having a label, the marked pixel is given that label and if the adjacent pixels already scanned include pixels having different labels the marked pixel is given one of these labels and the fact that the pixels with these labels are all associated is noted.

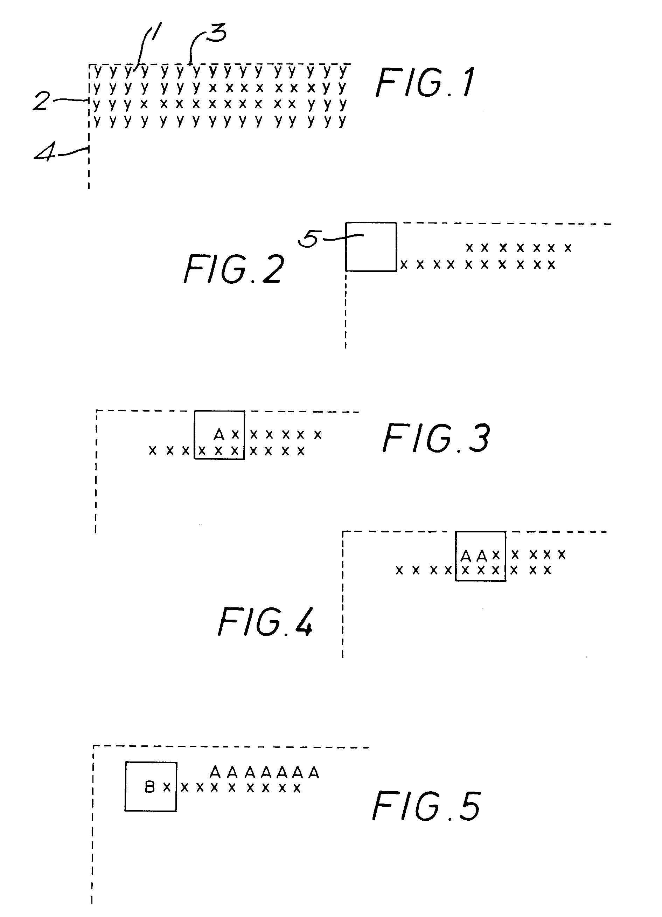

Looking at Figure 1 an array of pixels 1 are shown arranged in rows 2 and columns 3 as is normal. The pixels shown as X's have been flagged by a previous data processing stage as having an associated value over a threshold while those shown as Y's have not, the edge of the array is indicated by a dashed line 4.

The operation of a known image processing method will now be described with reference to Figures 1 to 10.

The array is then scanned using a 3 x 3 window 5, shown in Figure 2 where the Y's are omitted forclar- ity. The window 5 is scanned across the array one row 2 at a time looking at the pixel 1 at the centre of the window 5.

When the window 5 reaches a point where the central pixel is an X it examines the eight adjacent pixels 1 to see whether any of them contains a label.

If none of the adjacent pixels 1 contains a label a new label is assigned to the central pixel. If one or more of the eight adjacent pixels have been assigned a single label, the central pixel is assigned that label. If two or more of the eight adjacent pixels have been assigned different labels the central pixel is assigned the earliest of those labels.

In Figure 3 the window 5 has reached a point where the central pixel is flagged X and since none of the eight adjacent pixels have labels assigned the central pixel is assigned the label A.

The window 5 then scans on to the next position and here also the central pixel is flagged. One of the eight adjacent pixels has already been assigned the label A, so the central pixel is also assigned the label A, as shown in Figure 4. This process is repeated until all of the flagged pixels in this row have been assigned the label A.

When the widow 5 scans along the next row it reaches the point shown in Figure 5 where central pixel is flagged. None of the eight adjacent pixels have been assigned a label, so the central pixel is assigned the next new label B.

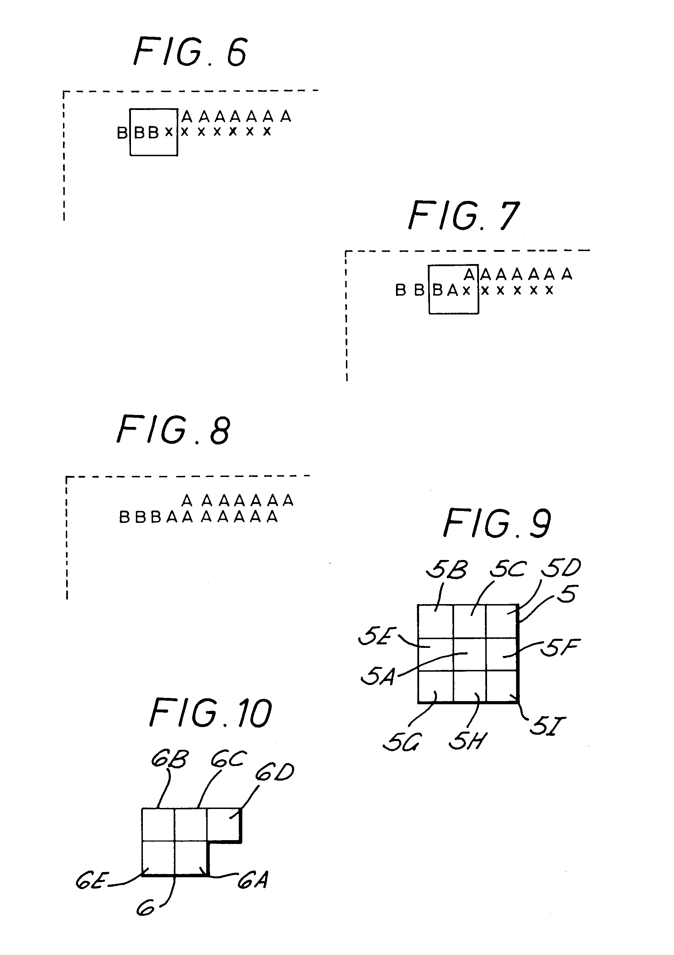

The window 5 continues to scan along this row, when each of the flagged pixels is examined in turn one of the eight adjacent pixels will have the label B, so each of the flagged pixels is also assigned the label B, as shown in Figure 6.

When the window reaches the point shown in Figure 7 the central pixel is flagged so the eight adjacent pixels are examined. One of the adjacent pixels has been assigned the label A and another has been assigned the label B so the central pixel is also assigned the label A and a note is made that the pixels assigned the labels Aand B are parts of the same object in the image.

The window 5 then continues along the row, at each flagged pixel one of the eight adjacent pixels will have been assigned the label A, so all of the remaining flagged pixels are assigned the label A, as shown in Figure 8.

Referring to Figure 9 the 3 x 3 window 5 is shown. This comprises a central pixel 5A and the eight adjacent pixels 5B to 51.

It has been realised that where the window 5 is scanned across the image from left to right across each row in turn, the rows being scanned in order from top to bottom, as shown in Figures 1 to 8 the checking of pixels 5F to 51 is unnecessary because they cannot have any assigned labels.

An image processing method according to the invention employs a five pixel window 6 comprising a pixel 6A which is checked to see if it is flagged and four adjacent pixels 6B to 6E. Pixels 6B to 6D are in the last line scanned, pixel 6C is adjacent the pixel 6A, while pixels 6D and 6D are adjacent the pixel 6B and are behind and in front of the pixel 6C in the row in the direction of scan of the window 6 respectively.

Pixel 6E is in the same row as pixel 6Aand behind it as the window 6 scans across the image. Behind is used here to signify that the pixel 6E is in the position last occupied by the pixel 6A.

The image processor employs the window 6 in the same manner as the prior art window 5, the window6 is scanned across the image one row 2ata a time so that each pixel 1 of the image in turn is covered by the pixel 6A.

When the window 6 reaches a point where the pixel 6A is flagged it examines the adjacent pixels 6B to 6E to see whether they have labels assigned to them. As before, if none of the adjacent pixels 6B to 6E have been assigned labels the pixel 6A is assigned the next free label whereas if one or more of the adjacent pixels 6B to 6E have been assigned labels the pixel 6A is assigned the lowest of these labels, and if there are a plurality of different labels assigned the fact that these labels are all associated with a single object is noted.

Clearly for some boundary pixels in the array some or all of the window pixels 6B to 6E may correspond to areas outside the array, for example in the first, top row, of the image the pixels 6B to 6D will all correspond to positions outside the array, in these positions the pixels of the window lying outside the array are just ignored.

The window 6 produces the same results as the window 5, but has four fewer pixels to check and so requires less comparisons and calculations to be carried out, as a result the image processing can be carried out faster or using less computing power.

The amount of calculation required can be reduced still further by looking at the pixels 6B to 6E in order. If pixel 6A is flagged and pixel 6E is examined first and has an assigned label only pixel 6D need then be examined and the pixel 6A assigned the lowest label assigned to pixels 6E and 6D. In this case there is no need to examine pixels 6B or 6C.

Similarly if there is no label assigned to pixel 6E but there is a label assigned to pixel 6D only pixel 6B need then be examined and the pixel 6Aassigned the lowest label assigned to pixels 6B and 6D. In this case there is no need to examine pixel 6C.

If the window 6 was scanned across the image in the opposite sense, or scanned each column in turn instead of each row in turn the arrangement of pixels in the window 6 would of course have to be reoriented, but in all cases the four adjacent and already scanned pixels should make up the window.

It would be possible to combine the separate steps of flagging and labelling as described above into a single labelling process in which the values associated with the pixels rather than the presence or absence of a flag is used as a criterion for labelling. They have been described separately because many image processing systems carry out the flagging process already for other reasons, so a separate labelling step to be added to the existing flagging process is more efficient than carrying out both the flagging and labelling processes on the raw data.

## Claims

1. A method of image processing to identify which pixels having some pre-determined property in the image are associated together comprising the steps of:
(i) marking every pixel having the pre-determined property;
(ii) scanning across the image and for each marked pixel checking whether any of the adjacent pixels already scanned has a label; and (iii) if none of the adjacent pixels already scanned has a label the marked pixel is given a new label; if the adjacent pixels already scanned include one or more pixels having a label, the marked pixel is given that label and if the adjacent pixels already scanned include pixels having different labels the marked pixel is given one of these labels and the fact that the pixels with these labels are all associated is noted.

2. Amethod as claimed in claim 1 in which the pixels are arranged in rows and columns and each row in turn is scanned and where the adjacent pixels checked in step (ii) are those adjacent the marked pixel in the preceding row scanned and the preceding pixel in the same row as the marked pixel.

3. Amethod as claimed in claim 1 in which the pixels are arranged in columns and rows and each column in turn is scanned and where the adjacent pixels checked in step (ii) are those adjacent the marked pixel in the preceding column scanned and the preceding pixel in the same column as the marked pixel.

4. A method as claimed in any preceding claim in which the labels are issued in order and, in step (iii), when the adjacent pixels already scanned in- dude pixels having different labels the marked pixel is given the earliest of the labels in the order of issue.

5. A method of image processing to identify which pixels having some pre-determined property in the image are associated together comprising the steps of:
(i) scanning across the image, and for each pixel deciding whether or not it has the pre-determined property and if it has checking whether any of the adjacent pixels already scanned has a label; and
(ii) if none of the adjacent pixels already scanned has a label the marked pixel is given a new label; if the adjacent pixels already scanned include one or more pixels having a label, the marked pixel is given that label and if the adjacent pixels already scanned include pixels having different labels the marked pixel is given one of these labels and the fact that the pixels with these labels are all associated is noted.
